# FASCICULE DE BREVET EUROPEEN

(11) **EP 3 774 171 B1**
(45) Date de publication et mention de la délivrance du brevet: **19.10.2022**
(21) Numéro de dépôt: 19720999.2
(22) Date de dépôt: 09.04.2019
(51) Int. Cl.: F16L 15/00, B23P 19/06, E21B 17/042

(54) **PROCÉDÉ D'ÉVALUATION DE LA QUALITÉ DE RACCORDEMENT DE DEUX COMPOSANTS TUBULAIRES**
VERFAHREN ZUR BEURTEILUNG DER QUALITÄT DER KOPPLUNG ZWEIER ROHRFÖRMIGER KOMPONENTEN
METHOD FOR ASSESSING THE QUALITY OF THE COUPLING OF TWO TUBULAR COMPONENTS

(30) Priorité: 10.04.2018 FR 1853137
(43) Date de publication de la demande: 17.02.2021
(73) Titulaire: Vallourec Oil and Gas France, 59620 Aulnoye-Aymeries (FR)
(72) Inventeur: SCHES Céline, 92100 Boulogne-Billancourt (FR); BOURLART, Denis, 92100 Boulogne-Billancourt (FR)
(74) Mandataire: Casalonga
(86) Numéro de dépôt international: PCT/FR2019/050828
(87) Numéro de publication internationale: WO 2019/197772

(56) Documents cités:
- US-A- 4 102 182
- US-A- 4 375 121
- US-A- 4 685 050
- US-A1- 2016 187 213

## Description

La présente invention se rapporte, de manière générale, à des composants tubulaires comprenant une portion filetée et, plus précisément, à un procédé de raccordement d'une portion filetée d'un premier composant tubulaire avec une portion filetée d'un deuxième composant tubulaire.

Plus particulièrement, l'invention concerne un procédé d'évaluation de la qualité de raccordement d'un premier composant tubulaire comprenant une portion filetée avec un deuxième composant tubulaire comprenant une portion filetée.

Dans le domaine de l'exploitation pétrolière et gazière, que ce soit dans le cadre d'une implantation offshore ou onshore qui fait intervenir des opérations de forages et d'exploitation de puits, les opérations réalisées comprennent le raccordement de composants tubulaires entre eux et leur descente dans les puits afin de constituer des colonnes de forage ou des colonnes de puits d'exploitation de pétrole ou de gaz.

Une portion filetée mâle ou femelle disposée à une extrémité d'un premier composant tubulaire peut être directement raccordée à une portion filetée complémentaire d'un deuxième composant tubulaire.

Selon un autre cas, les premier et deuxième composants tubulaires peuvent être indirectement raccordés au moyen d'un composant tubulaire intermédiaire, tel qu'un raccord.

Les composants tubulaires sont assemblés sous des contraintes définies afin de répondre aux exigences de serrage et d'étanchéité imposées par des conditions d'utilisation, afin de garantir l'intégrité de l'assemblage lors de son utilisation sur toute sa durée de vie.

Cependant, il peut arriver que le raccordement ne soit pas correctement réalisé ce qui peut endommager les composants tubulaires ou conduire à leur séparation prématurée.

La qualité du vissage influe donc directement sur l'étanchéité et la longévité de l'assemblage de composants tubulaires. Il est alors nécessaire d'évaluer la qualité du raccordement effectué en validant ou invalidant la conformité du vissage réalisé.

Le document US20160187213 décrit un procédé d'évaluation du vissage d'une vis permettant de vérifier qu'un vissage a été effectué sur le filetage complet.

Le document US4102182 décrit un procédé d'évaluation du vissage d'un élément fileté basé sur la détection de la variation de l'augmentation de couple de vissage.

Le document US4685050 décrit un procédé de vissage d'attaches filetées en fonction des contraintes appliquées sur un élément de vissage.

Le document US4375121 décrit un procédé pour déterminer le frottement dynamique dans un joint fileté.

Classiquement, les outils destinés au raccordement de composants tubulaires comprennent des capteurs configurés pour déterminer le couple appliqué lors du vissage ainsi que le nombre de tours du premier composant tubulaire relativement au deuxième composant tubulaire. Ces outils permettent de tracer une courbe représentant l'évolution de la valeur du couple en fonction du nombre de tours effectués pendant l'assemblage, que l'on appelle généralement une « courbe de vissage ».

Il est connu du document US2014/071056 un procédé de raccordement d'un premier et d'un deuxième composants tubulaires filetés comportant chacun un épaulement. Le couple appliqué ainsi que le nombre de tours lors du raccordement sont mesurés. Le raccordement est ensuite évalué en fonction des paramètres suivants : la valeur du couple lorsque l'épaulement du premier composant tubulaire entre en contact avec l'épaulement du deuxième composant tubulaire ; le nombre de tours effectués par le premier composant tubulaire à partir du contact entre l'épaulement du premier composant tubulaire et l'épaulement du deuxième composant tubulaire jusqu'à la position finale des composants tubulaires ; la pente de la portion de la courbe à partir du contact entre l'épaulement du premier composant tubulaire et l'épaulement du deuxième composant tubulaire jusqu'à la position finale ; et la valeur du couple à la position finale. Ces paramètres doivent chacun être compris entre une valeur minimale et une valeur maximale provenant de courbes de référence.

Toutefois, le nombre limité de paramètres considérés ne permet pas d'interpréter tous les cas de figures de raccordement et la probabilité d'une évaluation non satisfaisante reste importante. Il y a nécessité de diminuer cette probabilité d'évaluation non satisfaisante. Sans une supervision humaine supplémentaire, une partie des raccordements ayant échoués peuvent être considérés à tort comme ayant été effectués avec succès, et inversement. Or un raccordement mal effectué peut avoir des conséquences dramatiques pour la sécurité ou l'environnement. Il y a nécessité d'améliorer les techniques d'évaluation du raccordement de composants tubulaires pour améliorer l'intégrité de la colonne constituée.

Il y a également un besoin pour une méthode qui permet d'effectuer des évaluations fiables que l'échantillonnage des points de mesure soit élevé ou faible. En effet, selon l'équipement utilisé, une courbe de vissage peut être élaborée avec plus de 3000 points de mesure ou bien être obtenue avec moins de 300 points de mesure.

La plupart des raccordements effectués nécessite une vérification supplémentaire menée par une personne compétente. Cette personne peut être alors sujette aux risques liés à sa présence sur la plate-forme sur laquelle a lieu le raccordement. Aussi, l'évaluation selon les procédés connus peut ralentir le rythme des opérations d'assemblage et de descente de tubes réalisées sur chantier.

L'invention a donc pour but de pallier ces inconvénients et se rapporte à un procédé de raccordement de composants tubulaires filetés conduisant à une évaluation précise et fiable de la qualité du raccordement.

Il est ainsi proposé un procédé de raccordement d'un premier composant tubulaire comportant une portion filetée avec un deuxième composant tubulaire comportant une portion filetée comprenant : l'engagement du premier composant tubulaire sur le deuxième composant tubulaire ; la rotation du premier composant tubulaire par rapport au deuxième composant tubulaire pour le vissage des portions filetées ; l'obtention d'un ensemble de points constituant une courbe représentant le couple appliqué lors du vissage du premier composant tubulaire jusqu'à une position finale en fonction du nombre de tours effectués par le premier composant tubulaire relativement au deuxième composant tubulaire ; la comparaison d'un ou plusieurs paramètres de la courbe obtenue avec une ou plusieurs courbe(s) de référence d'une base de données dans laquelle chaque courbe de référence est associée à une évaluation de la qualité de raccordement des premier et deuxième composants tubulaires de référence; et l'évaluation de la qualité de raccordement des premier et deuxième composants tubulaires d'après l'étape de comparaison de la courbe obtenue avec les courbes de référence.

En outre, l'étape de comparaison comprend la comparaison de la forme d'au moins une portion de la courbe obtenue.

Selon une caractéristique, chaque courbe de référence de la base de données peut être associée à un statut de raccordement représentatif de l'état conforme ou non conforme du raccordement des premier et deuxième composants tubulaires de référence.

De préférence, l'attribution du statut de raccordement de chaque courbe de référence de la base de données est réalisée par expertise humaine.

L'étape de comparaison comprend une comparaison de la forme de la portion de la courbe obtenue à partir de l'engagement du premier composant tubulaire sur le deuxième composant tubulaire jusqu'au contact entre une première portée d'étanchéité du premier composant tubulaire et une deuxième portée d'étanchéité du deuxième composant tubulaire, et/ou de la portion de la courbe obtenue à partir du contact entre la première portée d'étanchéité du premier composant tubulaire et la deuxième portée d'étanchéité du deuxième composant tubulaire jusqu'au contact entre le premier épaulement du premier composant tubulaire et le deuxième épaulement du deuxième composant tubulaire, et/ou de la portion de la courbe obtenue à partir du contact entre le premier épaulement du premier composant tubulaire et le deuxième épaulement du deuxième composant tubulaire jusqu'à la position finale.

De préférence, l'étape de comparaison et l'étape d'évaluation sont réalisées par un algorithme entraîné par apprentissage automatique à partir de la base de données de courbes de référence, après obtention de la courbe associée à l'évaluation de la qualité de raccordement des premier et deuxième composants tubulaires, la courbe obtenue étant ajoutée à la base de données.

De préférence, l'algorithme entraîné par apprentissage automatique à partir de la base de données de courbes de référence donne un résultat sous la forme d'une probabilité de validité de la courbe obtenue.

Avantageusement, l'algorithme est configuré pour comparer la linéarité de la portion de la courbe obtenue à partir de l'engagement des premier et deuxième composants tubulaires jusqu'au contact entre un premier épaulement du premier composant tubulaire et un deuxième épaulement du deuxième composant tubulaire par rapport à une ou plusieurs courbe(s) de référence de la base de données.

Dans une variante, l'algorithme est configuré pour comparer la linéarité de la portion de la courbe obtenue à partir du contact entre la première portée d'étanchéité du premier composant tubulaire et la deuxième portée d'étanchéité du deuxième composant tubulaire jusqu'au contact entre le premier épaulement du premier composant tubulaire et le deuxième épaulement du deuxième composant tubulaire.

Dans une variante alternative ou complémentaire, l'algorithme peut être configuré pour comparer la linéarité de la portion de la courbe obtenue à partir du contact entre le premier épaulement du premier composant tubulaire et le deuxième épaulement du deuxième composant tubulaire jusqu'à la position finale.

De manière avantageuse, l'algorithme est configuré pour comparer des portions décroissantes de la courbe obtenue avec une ou plusieurs courbe(s) de référence de la base de données. Dans une variante, l'algorithme est configuré pour sommer les pertes de couple sur la portion de courbe entre l'engagement du premier composant tubulaire sur le deuxième composant tubulaire jusqu'au contact entre une première portée d'étanchéité du premier composant tubulaire et une deuxième portée d'étanchéité du deuxième composant tubulaire. De plus, l'algorithme peut être configuré pour l'obtention d'une courbe moyenne de référence à partir de la base de données des courbes de référence, et configuré pour calculer la distance moyenne entre la courbe obtenue et la courbe moyenne de référence. De préférence cette distance est calculée à partir du point de portée, c'est-à-dire le point de contact entre la première portée d'étanchéité du premier composant tubulaire et la deuxième portée d'étanchéité du deuxième composant tubulaire. Cette distance est calculée avec la norme L2 et donc en calculant pour chaque point évalué la racine carrée de la somme des carrés des composantes du vecteur différentiel entre le point de la courbe obtenue normalisée et le point de la courbe de référence correspondante normalisée.

Les courbes de référence peuvent être normalisées par rapport à un couple final de référence en ordonnée, qui est le couple final moyen des courbes de référence et en abscisse par une rotation de référence, qui représente le nombre de rotations effectuées entre le début du raccordement et l'atteinte du couple final moyen de référence.

Selon un mode de réalisation, l'algorithme peut être configuré pour calculer et comparer par rapport à une ou plusieurs courbes de référence de la base de données l'aire du triangle délimité par la portion de la courbe obtenue à partir du contact entre une première portée d'étanchéité du premier composant tubulaire et une deuxième portée d'étanchéité du deuxième composant tubulaire jusqu'au contact entre un premier épaulement du premier composant tubulaire et un deuxième épaulement du deuxième composant tubulaire, une droite de pente nulle passant par le point de contact entre la première portée d'étanchéité du premier composant tubulaire et la deuxième portée d'étanchéité du deuxième composant tubulaire, et une droite verticale passant par le point de contact entre le premier épaulement du premier composant tubulaire et le deuxième épaulement du deuxième composant tubulaire, et/ou configuré pour calculer l'aire du triangle délimité par la portion de la courbe obtenue à partir du contact entre le premier épaulement du premier composant tubulaire et le deuxième épaulement du deuxième composant tubulaire, une droite de pente nulle passant par le point de contact entre le premier épaulement du premier composant tubulaire et le deuxième épaulement du deuxième composant tubulaire, et une droite verticale passant par le point de la courbe obtenue à la position finale.

Préférentiellement, l'algorithme est configuré pour calculer la longueur de la portion de la courbe obtenue à partir du contact entre une première portée d'étanchéité du premier composant tubulaire et une deuxième portée d'étanchéité du deuxième composant tubulaire jusqu'à la position finale. De cette manière, après comparaison avec une ou plusieurs courbes de référence de la base de données, l'algorithme peut mettre en évidence du bruit ou des variations anormales du couple.

De plus, l'algorithme peut être configuré pour effectuer une Analyse en Composantes Principales réalisée à partir de plusieurs paramètres de la courbe obtenue.

Selon une caractéristique, l'algorithme peut être configuré pour effectuer un Partitionnement de données, de préférence un Partitionnement en k-moyennes et/ou un Partitionnement basé sur la densité.

Selon une autre caractéristique, l'algorithme peut être de type t-SNE.

Selon un mode de réalisation, l'algorithme utilise des techniques choisies parmi l'Analyse en Composantes Principales, Partitionnement en k-moyennes, Partitionnement basé sur la densité, analyse t-SNE pour réaliser des groupements de courbes de référence et l'algorithme applique lesdites techniques à la courbe obtenue afin de la classer dans un ou plusieurs groupements de courbes de référence, et ensuite l'algorithme détermine selon l'appartenance de la courbe obtenue aux différents groupes de courbes la probabilité de validité de la courbe obtenue.

Selon un mode de réalisation, l'algorithme peut être configuré pour calculer la somme des pertes de couple sur la portion de courbe se situant entre le début du vissage et le point de portée.

Avantageusement, l'algorithme peut être configuré pour comparer la linéarité de la portion de la courbe obtenue à partir du contact entre le premier épaulement du premier composant tubulaire et le deuxième épaulement du deuxième composant tubulaire jusqu'à la position finale.

D'autres buts, avantages et caractéristiques ressortiront de la description qui va suivre, donnée à titre d'exemple purement illustratif et faite en référence aux dessins annexés sur lesquels :
- Les figures 1A, 1B et 1C sont des vues en coupe d'un premier et d'un deuxième composants tubulaires à raccorder, respectivement, dans une position de vissage, dans une position d'étanchéité et dans une position d'épaulement ;
- La figure 2 illustre un procédé de raccordement d'une portion filetée d'un premier composant tubulaire avec une portion filetée d'un deuxième composant tubulaire selon l'invention ;
- La figure 3 illustre le couple appliqué lors du raccordement d'un premier et d'un deuxième composants tubulaires en fonction du nombre de tours effectués par le premier composant tubulaire relativement au second composant tubulaire ;
- La figure 4 illustre le calcul de l'aire sous la courbe couple/tours obtenue entre une position d'étanchéité et une position d'épaulement ; et
- La figure 5 illustre le calcul de l'aire sous la courbe couple/tours obtenue entre une position d'épaulement et une position finale.

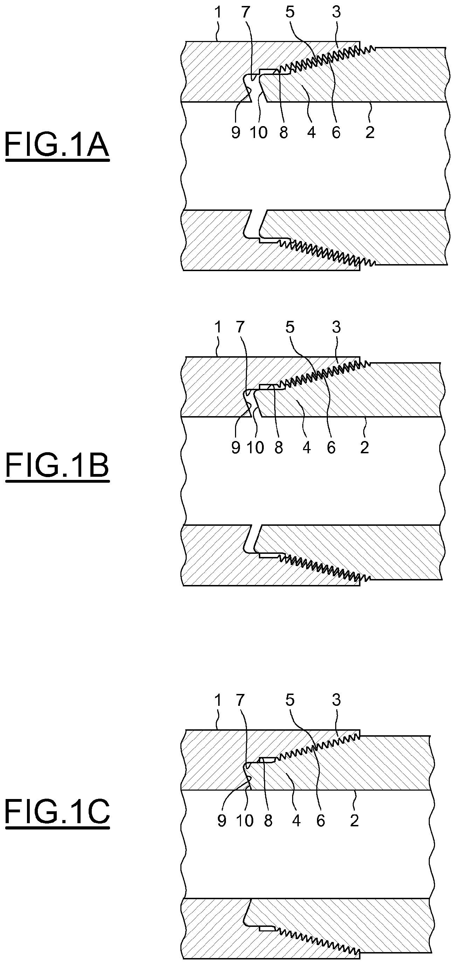

Les figures 1A, 1B et 1C illustrent différentes étapes du raccordement d'un premier composant tubulaire 1 avec un deuxième composant tubulaire 2.

Dans l'exemple illustré, le composant tubulaire 1 est un raccord de type manchon, configuré pour permettre le raccordement du deuxième composant tubulaire 2 avec un troisième composant tubulaire non représenté.

Les premier et deuxième composants tubulaires 1 et 2 comprennent une portion filetée, respectivement 3 et 4, disposée avantageusement à l'une de leur extrémité. Le filetage 5 de la portion filetée 3 et le filetage 6 de la portion filetée 4 sont configurés pour coopérer.

De plus, le premier composant tubulaire 1 comprend une première portée d'étanchéité 7, et le deuxième composant tubulaire 2 comprend une deuxième portée d'étanchéité 8. Les portées d'étanchéité sont formées par une surface destinée à assurer l'étanchéité de l'assemblage des composants tubulaires 1 et 2 lorsqu'ils sont raccordés.

Le premier composant tubulaire 1 comprend en outre un premier épaulement 9, et le deuxième composant tubulaire 2 comprend un deuxième épaulement 10. Les épaulements 9 et 10 forment une butée d'arrêt pour stopper le vissage.

Les portées d'étanchéité 7 et 8 ainsi que les épaulements 9 et 10 sont configurés pour coopérer respectivement.

Il existe des composants tubulaires qui ne comprennent pas de butée. Il existe des composants tubulaires qui ne comprennent ni butée ni portée d'étanchéité. L'invention a vocation à pouvoir s'appliquer en partie au raccordement de ces types de composants, pour les portions de courbe entre début de raccordement et contact des portées d'étanchéité, pour la portion entre contact des portées d'étanchéité et fin de raccordement, ou bien entre le début du raccordement et la fin du raccordement sans qu'il n'y ait de contact de portées d'étanchéité ou de butées pendant le raccordement.

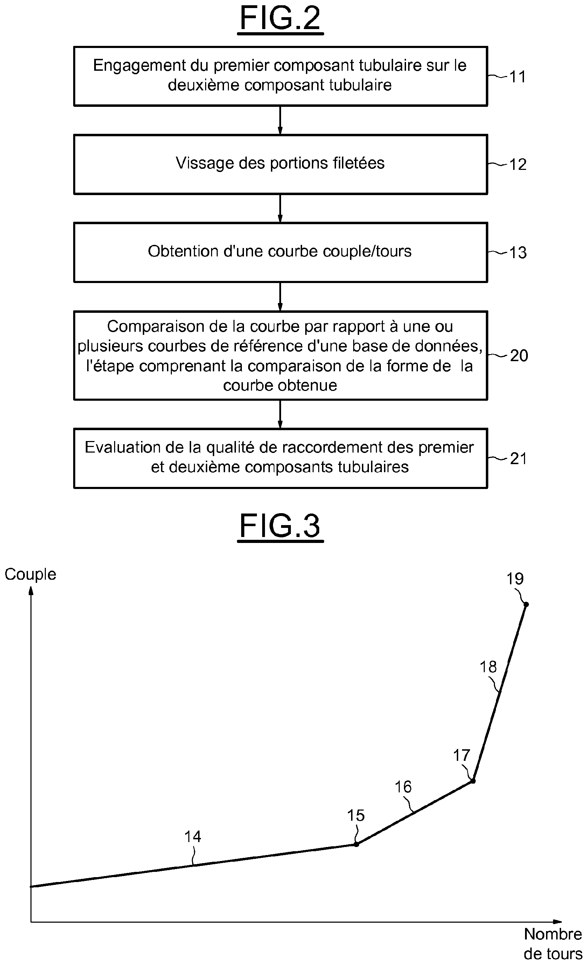

La figure 2 illustre un procédé de raccordement selon l'invention. Afin de raccorder les deux composants tubulaires 1 et 2, le procédé comprend tout d'abord l'engagement 11 du premier composant tubulaire 1 sur le deuxième composant tubulaire 2.

Pour le vissage des portions filetées 3 et 4, une rotation 12 du premier composant tubulaire 1 par rapport au deuxième composant tubulaire 2 est effectuée.

L'outil utilisé pour effectuer le raccordement est une clé de vissage. Cette clé de vissage est équipée de préhenseurs et de moteurs pour faire tourner relativement l'un par rapport à l'autre les premier et deuxième composants tubulaires. La clé de vissage est également équipée de capteurs pour mesurer le nombre de tours appliqués et le couple de vissage appliqué. Ces capteurs sont reliés à une électronique permettant de stocker au cours de l'opération les données de couples et de rotations appliquées et relatives à l'assemblage. Cette électronique est reliée à une unité de traitement comprenant un algorithme de traitement. L'unité de traitement est également équipée d'une interface utilisateur pour afficher un résultat d'évaluation et/ou la courbe obtenue lors d'un raccordement.

Le procédé comprend en outre l'obtention 13 d'un ensemble de points constituant une courbe représentant le couple appliqué lors du vissage du premier composant tubulaire 1 jusqu'à une position finale en fonction du nombre de tours effectués par le premier composant tubulaire 1 relativement au deuxième composant tubulaire 2.

Le profil général de la courbe obtenue dite courbe couple/tours, représentant le couple appliqué lors du vissage en fonction du nombre de tours effectués, est illustré à la figure 3. On peut voir que la courbe obtenue comprend trois portions distinctes de pentes différentes.

La première portion 14 correspond à l'engagement du premier composant tubulaire 1 sur le deuxième composant tubulaire 2 puis au vissage des portions filetées 3 et 4, tel qu'illustré à la figure 1A. Les filetages 5 et 6 entrent progressivement en contact, se traduisant par un couple appliqué de plus en plus important.

Au point d'accostage 15, la première portée d'étanchéité 7 du premier composant tubulaire 1 entre en contact avec la deuxième portée d'étanchéité 8 du deuxième composant tubulaire 2. Les composants tubulaires 1 et 2 sont alors dans une position dite position d'étanchéité, illustrée à la figure 1B.

La friction importante induite par la mise en contact des portées d'étanchéité 7 et 8 se traduit par un changement de pente et notamment une augmentation du couple appliqué par rotation, définissant une deuxième portion 16 de la courbe obtenue.

La rotation du premier composant tubulaire 1 relativement au deuxième composant tubulaire mène alors à un point d'épaulement 17. Les composants tubulaires sont dans une position dite position d'épaulement, illustrée à la figure 1C, dans laquelle le premier épaulement 9 du premier composant tubulaire 1 entre en contact avec le deuxième épaulement 10 du deuxième composant tubulaire 2. La friction accrue entre les surfaces des épaulements 9 et 10 respectifs vient s'ajouter à la friction résultant du contact entre les filetages 5 et 6 et la friction entre les portées d'étanchéité, ce qui se traduit par un nouveau changement de pente et une augmentation conséquente du couple appliqué, définissant une troisième portion 18 de la courbe obtenue s'étendant jusqu'à un point final 19 où les composants tubulaires ont atteint la position finale.

Par position finale, on entend dans la présente invention une position des premier et deuxième composants tubulaires 1 et 2 dans laquelle un couple maximal de vissage est appliqué et le raccordement est terminé.

Dans une étape suivant l'obtention 13 de la courbe couple/tours, le procédé comprend une étape de comparaison 20 d'un ou plusieurs paramètres de la courbe obtenue avec une ou plusieurs courbe(s) de référence d'une base de données.

Chaque courbe de référence de la base de données est associée à une évaluation de la qualité de raccordement de premier et deuxième composants tubulaires de référence réalisée préalablement au raccordement des premier et deuxième composants tubulaires 1 et 2.

En outre, l'étape de comparaison 20 comprend la comparaison de la forme d'au moins une portion de la courbe obtenue afin de déceler une éventuelle forme inhabituelle de la courbe obtenue, par exemple, induite par une variation anormale du couple.

Après comparaison, le procédé comprend alors une étape d'évaluation 21 de la qualité de raccordement des premier et deuxième composants tubulaires 1 et 2 d'après l'étape de comparaison 20 de la courbe obtenue par rapport aux courbes de référence.

Avantageusement, chaque courbe de référence de la base de données est associée à un statut de raccordement représentatif de l'état, conforme ou non conforme, du raccordement de premier et deuxième composants tubulaires de référence.

L'attribution du statut de raccordement de chaque courbe de référence de la base de données est réalisée, de préférence, par expertise humaine. Un expert ou tout autre personne compétente peut valider le raccordement des composants tubulaires de référence en associant le statut « conforme » à la courbe de référence obtenue, si celui-ci constate que le raccordement a été effectué avec succès. A l'inverse, l'expert invalide le raccordement des composants tubulaires de référence en associant le statut « non conforme » à la courbe de référence obtenue, si celui-ci constate que le raccordement a échoué. Il est ainsi possible d'obtenir une base de données étendue fiable.

L'étape de comparaison 20 peut comprendre la comparaison de la forme d'au moins une des trois portions 14, 16 et 18 de la courbe couple/tours obtenue, c'est-à-dire à partir de l'engagement du premier composant tubulaire 1 sur le deuxième composant tubulaire 2 jusqu'au contact entre la première portée d'étanchéité 7 du premier composant tubulaire 1 et la deuxième portée d'étanchéité 8 du deuxième composant tubulaire ; et/ou à partir du contact entre la première portée d'étanchéité 7 du premier composant tubulaire 1 et la deuxième portée d'étanchéité 8 du deuxième composant tubulaire 2 jusqu'au contact entre le premier épaulement 9 du premier composant tubulaire 1 et le deuxième épaulement 10 du deuxième composant tubulaire 2 ; et/ou à partir du contact entre le premier épaulement 9 du premier composant tubulaire 1 et le deuxième épaulement 10 du deuxième composant tubulaire 2 jusqu'à la position finale correspondant au point final 19.

Préférentiellement, l'étape de comparaison et l'étape d'évaluation sont réalisées par un algorithme, ou « intelligence artificielle », entraîné par apprentissage automatique à partir de la base de données de courbes de référence. Après obtention de la courbe couple/tours associée à l'évaluation de la qualité de raccordement des premier et deuxième composants tubulaires 1 et 2, la courbe obtenue est ajoutée à la base de données afin d'agrandir la base de données et entraîner l'algorithme afin d'augmenter sa précision de comparaison et d'évaluation de la qualité de raccordement. L'automatisation résultante de l'évaluation de la qualité de raccordement des composants tubulaires permet de se passer du facteur humain et augmenter ainsi la précision de l'évaluation.

Avantageusement, on pourra prévoir que la courbe obtenue soit associée à un statut de raccordement représentatif de l'état conforme ou non conforme du raccordement des premier et deuxième composants tubulaires de référence, après vérification de l'état du raccordement, réalisée par expertise humaine, avant d'être ajoutée à la base de données.

On pourra également prévoir que chaque courbe de référence de la base données associée à un statut non conforme soit associée à un statut supplémentaire caractérisant le problème à l'origine de la non-conformité du raccordement des composants tubulaires.

De préférence, l'algorithme entraîné par apprentissage automatique est configuré pour l'obtention d'une courbe moyenne de référence à partir de la base de données des courbes de référence, et configuré pour calculer la distance entre la courbe obtenue et la courbe moyenne de référence.

En outre, l'algorithme peut être de type DTW pour l'anglais « Dynamic Time Warping », soit déformation temporelle dynamique en français. De manière avantageuse, il pourra être prévu qu'un tel algorithme, permettant de mesurer la similarité entre deux suites qui peuvent varier au cours du temps, permette ici d'évaluer la distance entre la courbe obtenue et la courbe moyenne de référence calculée. En pratique, chaque courbe peut être traduite en matrice. Une matrice de distance peut être calculée. Les chemins entre le point de départ et le point d'arrivée sont calculés et le chemin présentant la somme minimale des distances est déterminé. On peut se référer à Silva, D. F., Batista, G. E. A. P. A. (2015). Speeding Up All-Pairwise Dynamic Time Warping Matrix Calculation.

Une courbe de référence calculée est établie en faisant la moyenne de courbes de vissage correspondant à des vissages validés pour des connexions de même modèle, même grade d'acier, même diamètre nominal. Il peut ainsi y avoir une courbe de référence calculée pour une connexion VAM^{©} TOP de grade L80 13Cr de diamètre externe nominal de 88,9mm et une courbe de référence calculée pour une connexion VAM^{©} 21 de grade VM110 en diamètre nominal extérieur 139,7 mm, ou encore une courbe de référence calculée pour une connexion VAM^{©} 21 de grade VM110 en diamètre nominal extérieur 168,3 mm.

Dans une variante, l'étape de comparaison de la forme de la courbe couple/tours obtenue avec une ou plusieurs courbes de référence peut comprendre la comparaison de la linéarité d'au moins une portion de la courbe obtenue.

A cet égard, l'algorithme est avantageusement configuré pour comparer la linéarité de la portion de la courbe obtenue à partir de l'engagement des premier et deuxième composants tubulaires 1 et 2 jusqu'au contact entre le premier épaulement 9 du premier composant tubulaire 1 et le deuxième épaulement 10 du deuxième composant tubulaire 2, par rapport à une ou plusieurs courbe(s) de référence de la base de données. En effet, la non-linéarité de la courbe avant la position d'épaulement, c'est-à-dire l'apparition de variations anormales du couple, est significative de la non-conformité du raccordement.

Dans une variante, l'algorithme est configuré pour comparer la linéarité de la portion de la courbe obtenue à partir du contact entre la première portée d'étanchéité du premier composant tubulaire et la deuxième portée d'étanchéité du deuxième composant tubulaire jusqu'au contact entre le premier épaulement du premier composant tubulaire et le deuxième épaulement du deuxième composant tubulaire.

Dans une variante alternative ou complémentaire, l'algorithme peut être configuré pour comparer la linéarité de la portion de la courbe obtenue à partir du contact entre le premier épaulement du premier composant tubulaire et le deuxième épaulement du deuxième composant tubulaire jusqu'à la position finale. En pratique, la linéarité peut être évaluée par le calcul en norme L2 de la différence entre la courbe obtenue et le segment de droite reliant les points d'épaulement et final. L'apparition de variations anormales du couple par rapport à la linéarité de l'accroissement du couple sur cette portion de courbe est particulièrement significative de la non-conformité du raccordement.

De plus, l'algorithme peut être configuré pour comparer les portions décroissantes de la courbe obtenue avec une ou plusieurs courbe(s) de référence de la base de données.

L'algorithme peut être configuré pour calculer la somme des pertes de couple sur la portion de courbe se situant entre le début du vissage et le point de portée, les pertes de couple se traduisant par des portions de courbe sur lesquelles ladite courbe est décroissante. En pratique, les portions décroissantes de ladite portion de courbe sont identifiées et les pertes de couple correspondantes sont sommées. Ceci traduit des variations de couple à haute fréquence.

De manière avantageuse, la comparaison de la forme de courbe couple/tours obtenue peut comprendre le calcul et la comparaison par l'algorithme de la longueur de la portion de la courbe obtenue à partir du contact entre la première portée d'étanchéité 7 du premier composant tubulaire 1 et la deuxième portée d'étanchéité 8 du deuxième composant tubulaire 2 jusqu'à la position finale, par rapport à une ou plusieurs courbes de référence de la base de données.

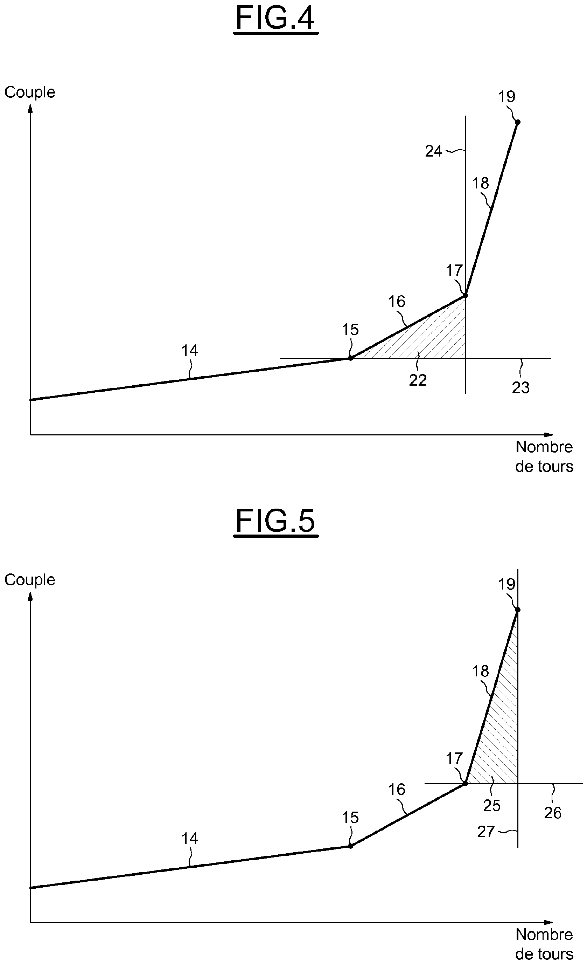

De préférence, l'algorithme est en outre configuré pour calculer l'aire 22 du triangle illustré à la figure 4, délimité par : la portion 16 de la courbe obtenue à partir du contact entre la première portée d'étanchéité 7 du premier composant tubulaire 1 et la deuxième portée d'étanchéité 8 du deuxième composant tubulaire 2 jusqu'au contact entre le premier épaulement 9 du premier composant tubulaire 1 et le deuxième épaulement 10 du deuxième composant tubulaire 2 ; une droite de pente nulle passant par le point d'accostage 15 ou point de contact entre la première portée d'étanchéité 7 du premier composant tubulaire 1 et la deuxième portée d'étanchéité 8 du deuxième composant tubulaire 2 ; et une droite 24 verticale passant par le point d'épaulement 17 ou point de contact entre le premier épaulement 9 du premier composant tubulaire 1 et le deuxième épaulement 10 du deuxième composant tubulaire 2.

Selon une alternative ou de manière supplémentaire, l'algorithme peut être configuré pour calculer l'aire 25 du triangle délimité par la portion 18 de la courbe obtenue à partir du contact entre le premier épaulement 9 du premier composant tubulaire 1 et le deuxième épaulement 10 du deuxième composant tubulaire 2 ; une droite 26 de pente nulle passant par le point 17 de contact entre le premier épaulement 9 du premier composant tubulaire 1 et le deuxième épaulement 10 du deuxième composant tubulaire 2 ; et une droite 27 verticale passant par le point 19 de la courbe obtenue à la position finale.

L'algorithme peut alors être configuré pour comparer l'aire 22, 25 calculée par rapport à une ou plusieurs courbes de référence de la base de données.

On pourra aussi prévoir que l'algorithme entraîné par apprentissage automatique soit de type t-SNE pour l'anglais « t-distributed stochastic neighbor embedding ». L'algorithme t-SNE est une technique de réduction de dimension pour la visualisation de données. Il s'agit d'une méthode non-linéaire permettant de représenter un ensemble de points d'un espace à grande dimension dans un espace de deux ou trois dimensions, les données peuvent ensuite être visualisées avec un nuage de points.

Selon un mode de réalisation, l'algorithme peut aussi être configuré pour effectuer un Partitionnement de données, de préférence un Partitionnement en k-moyennes et/ou un Partitionnement basé sur la densité dit « DBSCAN » pour l'anglais « density-based spatial clustering of applications with noise ».

Avantageusement, l'algorithme est configuré pour effectuer une Analyse en Composantes Principales (ACP) réalisée à partir d'un ou plusieurs paramètres de la courbe obtenue, pour l'évaluation de la qualité du raccordement. L'Analyse en Composantes Principales consiste à transformer des variables liées entre elles en nouvelles variables décorrélées les unes des autres.

De manière encore plus avantageuse, l'ACP est effectuée à partir de paramètres dont au moins un paramètres parmi : le nombre de portions de courbes linéaires de la courbe obtenue ; le nombre de portions décroissantes de la courbe obtenue ; et la valeur de la pente de la troisième portion 18 de la courbe obtenue, c'est-à-dire entre la position d'épaulement et la position finale, après régression linéaire.

En plus de la comparaison de la forme d'une portion de la courbe obtenue, l'étape de comparaison 20 peut être réalisée en considérant également un ou plusieurs des quatre paramètres suivants : la valeur du couple lorsque le premier épaulement 9 du premier composant tubulaire 1 entre en contact avec le deuxième épaulement 10 du deuxième composant tubulaire 2 ; le nombre de tours effectués par le premier composant tubulaire 1 à partir du contact entre le premier épaulement 9 du premier composant tubulaire 1 et le deuxième épaulement 10 du deuxième composant tubulaire 2 jusqu'à la position finale des composants tubulaires ; la pente de la portion de la courbe à partir du contact entre l'épaulement du premier composant tubulaire et l'épaulement du deuxième composant tubulaire jusqu'à la position finale ; et la valeur du couple à la position finale.

De préférence, l'ACP est également effectuée à partir d'un ou plusieurs des quatre paramètres ci-dessus exposés.

Dans les différents modes de réalisation décrits, les méthodes peuvent comprendre une étape de normalisation des courbes obtenues et les courbes de référence préalablement à l'application de l'algorithme selon l'invention. Ceci permet d'améliorer sensiblement le résultat de l'évaluation de la conformité d'assemblage.

## Revendications

1. Procédé de raccordement d'un premier composant tubulaire (1) comportant une portion filetée (3) avec un deuxième composant tubulaire (2) comportant une portion filetée (4) comprenant :
l'engagement (11) du premier composant tubulaire (1) sur le deuxième composant tubulaire (2) ;
la rotation (12) du premier composant tubulaire (1) par rapport au deuxième composant tubulaire (2) pour le vissage des portions filetées (3, 4) ;
l'obtention (13) d'un ensemble de points constituant une courbe représentant le couple appliqué lors du vissage du premier composant tubulaire (1) jusqu'à une position finale en fonction du nombre de tours effectués par le premier composant tubulaire (1) relativement au deuxième composant tubulaire (2) ;
la comparaison (20) d'un ou plusieurs paramètres de la courbe obtenue avec une ou plusieurs courbe(s) de référence d'une base de données dans laquelle chaque courbe de référence est associée à une évaluation de la qualité de raccordement de premier et deuxième composants tubulaires de référence; et
l'évaluation (21) de la qualité de raccordement des premier et deuxième composants tubulaires (1, 2) d'après l'étape de comparaison (20) de la courbe obtenue avec les courbes de référence,
**caractérisé en ce que** l'étape de comparaison (20) comprend la comparaison de la forme d'au moins une portion de la courbe obtenue,
et **en ce que** l'étape de comparaison (20) comprend une comparaison de la forme de la portion de la courbe obtenue à partir de l'engagement du premier composant tubulaire (1) sur le deuxième composant tubulaire (2) jusqu'au contact entre une première portée d'étanchéité (7) du premier composant tubulaire (1) et une deuxième portée d'étanchéité (8) du deuxième composant tubulaire (2), et/ou de la portion (16) de la courbe obtenue à partir du contact entre la première portée d'étanchéité (7) du premier composant tubulaire (1) et la deuxième portée d'étanchéité (8) du deuxième composant tubulaire (2) jusqu'au contact entre le premier épaulement (9) du premier composant tubulaire (1) et le deuxième épaulement (10) du deuxième composant tubulaire (2), et/ou de la portion (18) de la courbe obtenue à partir du contact entre le premier épaulement (9) du premier composant tubulaire (1) et le deuxième épaulement (10) du deuxième composant tubulaire (2) jusqu'à la position finale.

2. Procédé selon la revendication 1, **caractérisé en ce que** chaque courbe de référence de la base de données est associée à un statut de raccordement représentatif de l'état conforme ou non conforme du raccordement des premier et deuxième composants tubulaires de référence

3. Procédé selon la revendication 2, **caractérisé en ce que** l'attribution du statut de raccordement de chaque courbe de référence de la base de données est réalisée par expertise humaine.

4. Procédé selon l'une quelconque des revendications précédentes, **caractérisé en ce que** l'étape de comparaison (20) et l'étape d'évaluation (21) sont réalisées par un algorithme entraîné par apprentissage automatique à partir de la base de données de courbes de référence, après obtention de la courbe associée à l'évaluation de la qualité de raccordement des premier et deuxième composants tubulaires (1, 2) de la courbe obtenue étant ajoutée à la base de données.

5. Procédé selon la revendication 4, **caractérisé en ce que** l'algorithme est configuré pour comparer la linéarité de la portion de la courbe obtenue à partir de l'engagement des premier et deuxième composants tubulaires (1, 2) jusqu'au contact entre un premier épaulement (9) du premier composant tubulaire (1) et un deuxième épaulement (10) du deuxième composant tubulaire (2) par rapport à une ou plusieurs courbe(s) de référence de la base de données.

6. Procédé selon l'une quelconque des revendications 4 à 5, **caractérisé en ce que** l'algorithme est configuré pour comparer les portions décroissantes de la courbe obtenue avec une ou plusieurs courbe(s) de référence de la base de données.

7. Procédé selon l'une quelconque des revendications 4 à 6, **caractérisé en ce que** l'algorithme est configuré pour l'obtention d'une courbe moyenne de référence à partir de la base de données des courbes de référence, et configuré pour calculer la distance entre la courbe obtenue et la courbe moyenne de référence.

8. Procédé selon l'une quelconque des revendications 4 à 7, **caractérisé en ce que** l'algorithme est configuré pour calculer et comparer par rapport à une ou plusieurs courbes de référence de la base de données l'aire (22) du triangle délimité par la portion (16) de la courbe obtenue à partir du contact entre une première portée d'étanchéité (7) du premier composant tubulaire (1) et une deuxième portée d'étanchéité (8) du deuxième composant tubulaire (2) jusqu'au contact entre un premier épaulement (9) du premier composant tubulaire (1) et un deuxième épaulement (10) du deuxième composant tubulaire (2), une droite (23) de pente nulle passant par le point (15) de contact entre la première portée d'étanchéité (7) du premier composant tubulaire (1) et la deuxième portée d'étanchéité (8) du deuxième composant tubulaire (2), et une droite (24) verticale passant par le point (17) de contact entre le premier épaulement (7) du premier composant tubulaire (1) et le deuxième épaulement (8) du deuxième composant tubulaire (2), et/ou configuré pour calculer l'aire (25) du triangle délimité par la portion (18) de la courbe obtenue à partir du contact entre le premier épaulement (9) du premier composant tubulaire (1) et le deuxième épaulement (10) du deuxième composant tubulaire (2), une droite (26) de pente nulle passant par le point (17) de contact entre le premier épaulement (9) du premier composant tubulaire (1) et le deuxième épaulement (10) du deuxième composant tubulaire (2), et une droite (27) verticale passant par le point (19) de la courbe obtenue à la position finale.

9. Procédé selon l'une quelconque des revendications 4 à 8, **caractérisé en ce que** l'algorithme est configuré pour calculer la longueur de la portion de la courbe obtenue à partir du contact entre une première portée d'étanchéité (7) du premier composant tubulaire (1) et une deuxième portée d'étanchéité (8) du deuxième composant tubulaire (2) jusqu'à la position finale.

10. Procédé selon l'une quelconque des revendications 4 à 9, **caractérisé en ce que** l'algorithme est configuré pour effectuer une Analyse en Composantes Principales réalisée à partir de plusieurs paramètres de la courbe obtenue.

11. Procédé selon l'une quelconque des revendications 4 à 10, **caractérisé en ce que** l'algorithme est configuré pour effectuer un Partitionnement de données, de préférence un Partitionnement en k-moyennes et/ou un Partitionnement basé sur la densité.

12. Procédé selon l'une quelconque des revendications 4 à 11, **caractérisé en ce que** l'algorithme est de type t-SNE.

13. Procédé selon l'une quelconque des revendications précédentes, **caractérisé en ce que** l'algorithme peut être configuré pour calculer la somme des pertes de couple sur la portion de courbe se situant entre le début du vissage et le point de portée.

14. Procédé selon l'une quelconque des revendications précédentes, **caractérisé en ce que** l'algorithme peut être configuré pour comparer la linéarité de la portion de la courbe obtenue à partir du contact entre le premier épaulement du premier composant tubulaire et le deuxième épaulement du deuxième composant tubulaire jusqu'à la position finale.

## Patentansprüche

1. Verfahren zur Kopplung einer ersten rohrförmigen Komponente (1), die einen Gewindeabschnitt (3) aufweist, mit einer zweiten rohrförmigen Komponente (2), die einen Gewindeabschnitt (4) aufweist, umfassend:
das Ineingriffbringen (11) der ersten rohrförmigen Komponente (1) mit der zweiten rohrförmigen Komponente (2) ;
die Drehung (12) der ersten rohrförmigen Komponente (1) in Bezug auf die zweite rohrförmige Komponente (2) zu Verschrauben der Gewindeabschnitte (3, 4);
das Erhalten (13) einer Menge von Punkten, die eine Kurve bilden, die das ausgeübte Drehmoment beim Schrauben der ersten rohrförmigen Komponente (1) bis zu einer Endposition in Abhängigkeit von der Anzahl der Umdrehungen darstellt, die von der ersten rohrförmigen Komponente (1) relativ zur zweiten rohrförmigen Komponente (2) ausgeführt wurden;
den Vergleich (20) eines oder mehrerer Parameter der erhaltenen Kurve mit einer oder mehreren Referenzkurven einer Datenbank, in welcher jede Referenzkurve einer Beurteilung der Qualität der Kopplung einer ersten und einer zweiten rohrförmigen Referenzkomponente zugeordnet ist; und
die Beurteilung (21) der Qualität der Kopplung der ersten und der zweiten rohrförmigen Komponente (1, 2) gemäß dem Schritt des Vergleichs (20) der erhaltenen Kurve mit den Referenzkurven,
**dadurch gekennzeichnet, dass** der Schritt des Vergleichs (20) den Vergleich der Form wenigstens eines Abschnitts der erhaltenen Kurve umfasst,
und dadurch, dass der Schritt des Vergleichs (20) einen Vergleich der Form des Abschnitts der erhaltenen Kurve ab dem Eingriff der ersten rohrförmigen Komponente (1) mit der zweiten rohrförmigen Komponente (2) bis zum Kontakt zwischen einer ersten Dichtfläche (7) der ersten rohrförmigen Komponente (1) und einer zweiten Dichtfläche (8) der zweiten rohrförmigen Komponente (2) und/oder des Abschnitts (16) der erhaltenen Kurve ab dem Kontakt zwischen der ersten Dichtfläche (7) der ersten rohrförmigen Komponente (1) und der zweiten Dichtfläche (8) der zweiten rohrförmigen Komponente (2) bis zum Kontakt zwischen der ersten Schulter (9) der ersten rohrförmigen Komponente (1) und der zweiten Schulter (10) der zweiten rohrförmigen Komponente (2) und/oder des Abschnitts (18) der erhaltenen Kurve ab dem Kontakt zwischen der ersten Schulter (9) der ersten rohrförmigen Komponente (1) und der zweiten Schulter (10) der zweiten rohrförmigen Komponente (2) bis zur Endposition umfasst.

2. Verfahren nach Anspruch 1, **dadurch gekennzeichnet, dass** jede Referenzkurve der Datenbank einem Kopplungsstatus zugeordnet ist, der für den konformen oder nicht konformen Zustand der Kopplung der ersten und der zweiten rohrförmigen Referenzkomponente repräsentativ ist.

3. Verfahren nach Anspruch 2, **dadurch gekennzeichnet, dass** die Zuweisung des Kopplungsstatus jeder Referenzkurve der Datenbank durch menschliches Fachwissen erfolgt.

4. Verfahren nach einem der vorhergehenden Ansprüche, **dadurch gekennzeichnet, dass** der Schritt des Vergleichs (20) und der Schritt der Beurteilung (21) durch einen Algorithmus ausgeführt werden, der durch automatisches Lernen anhand der Datenbank von Referenzkurven trainiert wird, nach Erhalt der Kurve, die der Beurteilung der Qualität der Kopplung der ersten und der zweiten rohrförmigen Komponente (1, 2) der erhaltenen Kurve zugeordnet ist, zur Datenbank hinzugefügt wird.

5. Verfahren nach Anspruch 4, **dadurch gekennzeichnet, dass** der Algorithmus dafür ausgelegt ist, die Linearität des Abschnitts der erhaltenen Kurve ab dem Eingriff der ersten und der zweiten rohrförmigen Komponente (1, 2) bis zum Kontakt zwischen einer ersten Schulter (9) der ersten rohrförmigen Komponente (1) und einer zweiten Schulter (10) der zweiten rohrförmigen Komponente (2) in Bezug auf eine oder mehrere Referenzkurven der Datenbank zu vergleichen.

6. Verfahren nach einem der Ansprüche 4 bis 5, **dadurch gekennzeichnet, dass** der Algorithmus dafür ausgelegt ist, die fallenden Abschnitte der erhaltenen Kurve mit einer oder mehreren Referenzkurven der Datenbank zu vergleichen.

7. Verfahren nach einem der Ansprüche 4 bis 6, **dadurch gekennzeichnet, dass** der Algorithmus für das Erhalten einer mittleren Referenzkurve anhand der Datenbank der Referenzkurven ausgelegt ist und dafür ausgelegt ist, den Abstand zwischen der erhaltenen Kurve und der mittleren Referenzkurve zu berechnen.

8. Verfahren nach einem der Ansprüche 4 bis 7, **dadurch gekennzeichnet, dass** der Algorithmus dafür ausgelegt ist, den Flächeninhalt (22) des Dreiecks zu berechnen und in Bezug auf eine oder mehrere Referenzkurven der Datenbank zu vergleichen, das begrenzt wird durch den Abschnitt (16) der erhaltenen Kurve ab dem Kontakt zwischen einer ersten Dichtfläche (7) der ersten rohrförmigen Komponente (1) und einer zweiten Dichtfläche (8) der zweiten rohrförmigen Komponente (2) bis zum Kontakt zwischen einer ersten Schulter (9) der ersten rohrförmigen Komponente (1) und einer zweiten Schulter (10) der zweiten rohrförmigen Komponente (2), eine Gerade (23) mit Anstieg null, die durch den Kontaktpunkt (15) zwischen der ersten Dichtfläche (7) der ersten rohrförmigen Komponente (1) und der zweiten Dichtfläche (8) der zweiten rohrförmigen Komponente (2) verläuft, und eine vertikale Gerade (24), die durch den Kontaktpunkt (17) zwischen der ersten Schulter (7) der ersten rohrförmigen Komponente (1) und der zweiten Schulter (8) der zweiten rohrförmigen Komponente (2) verläuft, und/oder dafür ausgelegt ist, den Flächeninhalt (25) des Dreiecks zu berechnen, das begrenzt wird durch den Abschnitt (18) der erhaltenen Kurve ab dem Kontakt zwischen der ersten Schulter (9) der ersten rohrförmigen Komponente (1) und der zweiten Schulter (10) der zweiten rohrförmigen Komponente (2), eine Gerade (26) mit Anstieg null, die durch den Kontaktpunkt (17) zwischen der ersten Schulter (9) der ersten rohrförmigen Komponente (1) und der zweiten Schulter (10) der zweiten rohrförmigen Komponente (2) verläuft, und eine vertikale Gerade (27), die durch den Punkt (19) der erhaltenen Kurve in der Endposition verläuft.

9. Verfahren nach einem der Ansprüche 4 bis 8, **dadurch gekennzeichnet, dass** der Algorithmus dafür ausgelegt ist, die Länge des Abschnitts der erhaltenen Kurve ab dem Kontakt zwischen einer ersten Dichtfläche (7) der ersten rohrförmigen Komponente (1) und einer zweiten Dichtfläche (8) der zweiten rohrförmigen Komponente (2) bis zur Endposition zu berechnen.

10. Verfahren nach einem der Ansprüche 4 bis 9, **dadurch gekennzeichnet, dass** der Algorithmus dafür ausgelegt ist, eine Hauptkomponentenanalyse vorzunehmen, die anhand von mehreren Parametern der erhaltenen Kurve durchgeführt wird.

11. Verfahren nach einem der Ansprüche 4 bis 10, **dadurch gekennzeichnet, dass** der Algorithmus dafür ausgelegt ist, eine Datenpartitionierung vorzunehmen, vorzugsweise eine Partitionierung in k-Mitteln und/oder eine auf der Dichte basierende Partitionierung.

12. Verfahren nach einem der Ansprüche 4 bis 11, **dadurch gekennzeichnet, dass** der Algorithmus vom Typ t-SNE ist.

13. Verfahren nach einem der vorhergehenden Ansprüche, **dadurch gekennzeichnet, dass** der Algorithmus dafür ausgelegt sein kann, die Summe der Drehmomentverluste auf dem Kurvenabschnitt zu berechnen, der sich zwischen dem Beginn des Schraubvorgangs und dem Auflagepunkt befindet.

14. Verfahren nach einem der vorhergehenden Ansprüche, **dadurch gekennzeichnet, dass** der Algorithmus dafür ausgelegt sein kann, die Linearität des Abschnitts der erhaltenen Kurve ab dem Kontakt zwischen der ersten Schulter der ersten rohrförmigen Komponente und der zweiten Schulter der zweiten rohrförmigen Komponente bis zur Endposition zu vergleichen.

## Claims

1. Method for attaching a first tubular component (1) having a threaded portion (3) to a second tubular component (2) having a threaded portion (4), said method comprising:
fitting (11) the first tubular component (1) onto the second tubular component (2);
rotating (12) the first tubular component (1) with respect to the second tubular component (2) to screw the threaded portions (3, 4) together;
obtaining (13) a set of points constituting a curve representing the torque applied during the screwing of the first tubular component (1) up to an end position as a function of the number of turns made by the first tubular component (1) relative to the second tubular component (2);
comparing (20) one or more parameters of the curve obtained with one or more reference curve(s) in a database in which each reference curve is associated with an evaluation of the attachment quality of reference first and second tubular components; and
evaluating (21) the attachment quality of the first and second tubular components (1, 2) in accordance with the comparison step (20) of comparing the curve obtained with the reference curves,
**characterized in that** the comparison step (20) comprises the comparison of the shape of at least one portion of the curve obtained,
and **in that** the comparison step (20) comprises a comparison of the shape of the portion of the curve obtained from fitting the first tubular component (1) onto the second tubular component (2) until contact is made between a first sealing surface (7) of the first tubular component (1) and a second sealing surface (8) of the second tubular component (2), and/or of the portion (16) of the curve obtained from contact being made between the first sealing surface (7) of the first tubular component (1) and the second sealing surface (8) of the second tubular component (2) until contact is made between the first shoulder (9) of the first tubular component (1) and the second shoulder (10) of the second tubular component (2), and/or of the portion (18) of the curve obtained from contact being made between the first shoulder (9) of the first tubular component (1) and the second shoulder (10) of the second tubular component (2) up to the end position.

2. Method according to Claim 1, **characterized in that** each reference curve in the database is associated with an attachment status representing the compliant or noncompliant attachment state of the reference first and second tubular components.

3. Method according to Claim 2, **characterized in that** the attachment status of each reference curve in the database is assigned by human expertise.

4. Method according to any one of the preceding claims, **characterized in that** the comparison step (20) and the evaluation step (21) are performed by an algorithm trained via automatic learning on the basis of the database of reference curves, after obtaining the curve associated with the evaluation of the attachment quality of the first and second tubular components (1, 2) of the curve obtained being added to the database.

5. Method according to Claim 4, **characterized in that** the algorithm is configured to compare the linearity of the portion of the curve obtained from fitting the first and second tubular components (1, 2) together until contact is made between a first shoulder (9) of the first tubular component (1) and a second shoulder (10) of the second tubular component (2) with one or more reference curve(s) in the database.

6. Method according to either one of Claims 4 and 5, **characterized in that** the algorithm is configured to compare the decreasing portions of the curve obtained with one or more reference curve(s) in the database.

7. Method according to any one of Claims 4 to 6, **characterized in that** the algorithm is configured to obtain a reference mean curve from the database of reference curves, and configured to calculate the distance between the curve obtained and the reference mean curve.

8. Method according to any one of Claims 4 to 7, **characterized in that** the algorithm is configured to calculate and compare, with one or more reference curves in the database, the area (22) of the triangle delimited by the portion (16) of the curve obtained from contact being made between a first sealing surface (7) of the first tubular component (1) and a second sealing surface (8) of the second tubular component (2) until contact is made between a first shoulder (9) of the first tubular component (1) and a second shoulder (10) of the second tubular component (2), a zero-slope straight line (23) passing through the point (15) of contact between the first sealing surface (7) of the first tubular component (1) and the second sealing surface (8) of the second tubular component (2), and a vertical straight line (24) passing through the point (17) of contact between the first shoulder (7) of the first tubular component (1) and the second shoulder (8) of the second tubular component (2), and/or configured to calculate the area (25) of the triangle delimited by the portion (18) of the curve obtained from contact being made between the first shoulder (9) of the first tubular component (1) and the second shoulder (10) of the second tubular component (2), a zero-slope straight line (26) passing through the point (17) of contact between the first shoulder (9) of the first tubular component (1) and the second shoulder (10) of the second tubular component (2), and a vertical straight line (27) passing through the point (19) of the curve obtained at the end position.

9. Method according to any one of Claims 4 to 8, **characterized in that** the algorithm is configured to calculate the length of the portion of the curve obtained from contact being made between a first sealing surface (7) of the first tubular component (1) and a second sealing surface (8) of the second tubular component (2) up to the end position.

10. Method according to any one of Claims 4 to 9, **characterized in that** the algorithm is configured to perform a principal component analysis on the basis of multiple parameters of the curve obtained.

11. Method according to any one of Claims 4 to 10, **characterized in that** the algorithm is configured to perform data partitioning, preferably k-means partitioning and/or density-based partitioning.

12. Method according to any one of Claims 4 to 11, **characterized in that** the algorithm is a t-SNE algorithm.

13. Method according to any one of the preceding claims, **characterized in that** the algorithm can be configured to calculate the sum of the torque losses over the curve portion located between the start of the screwing and the bearing point.

14. Method according to any one of the preceding claims, **characterized in that** the algorithm can be configured to compare the linearity of the portion of the curve obtained from contact being made between the first shoulder of the first tubular component and the second shoulder of the second tubular component up to the end position.
